# EUROPEAN PATENT APPLICATION

(11) **EP 4 481 194 A1**
(43) Date of publication of application: **25.12.2024**
(21) Application number: 23382626.2
(22) Date of filing: 21.06.2023
(51) Int. Cl.: F03D 13/20, E04H 12/16, F03D 80/80

(54) **RETAINING DEVICE OF A POST-TENSIONING ELEMENT OF A POST-TENSIONING SYSTEM OF A TOWER OF A WIND TURBINE, GUIDING SYSTEM OF A TOWER OF A WIND TURBINE, TOWER OF A WIND TURBINE AND METHOD OF POST-TENSIONING A TOWER OF A WIND TURBINE**

(71) Applicant: Nordex Energy Spain, S.A.U., 31395 Barasoain (Navarra) (ES)
(72) Inventor: García, Iván, Barasoain (ES); Varela, Fernando, Barasoain (ES)
(74) Representative: Pons

(57) **Abstract**

The present invention relates to a retaining device of a post-tensioning element of a post-tensioning system of a tower of a wind turbine that maintains the distance between the interior wall of the tower and the post-tensioning element even if the tower suffers a bending moment due to lateral loads, to a post-tensioning system of a tower of a wind turbine comprising the retaining device and at least one post-tensioning element and the tower of a wind turbine comprising the post-tensioning system, and to a method of retaining a post-tensioning element of a post-tensioning system of a tower of a wind turbine.

## Description

### OBJECT OF THE INVENTION

The present invention relates to a retaining device of a post-tensioning element of a post-tensioning system of a tower of a wind turbine that maintains the distance between the interior wall of the tower and the post-tensioning element even if the tower suffers a bending moment due to lateral loads.

The invention also relates to a post-tensioning system of a tower of a wind turbine comprising the retaining device and at least one post-tensioning element and the tower of a wind turbine comprising the post-tensioning system.

Also, the invention relates to a method of retaining a post-tensioning element of a post-tensioning system of a tower of a wind turbine.

### BACKGROUND OF THE INVENTION

Concrete towers of wind turbines, and concrete parts of hybrid towers, preferably made of steel and concrete, are commonly provided with a post-tension system (e.g., cables, tendons, wires, strands...) in order to ensure that the concrete is under compression stresses during the most of the wind turbine lifetime. That is, in order to avoid undesirable tension stresses in the structure that would lead to excessive cracks in concrete and fatigue in reinforcements.

Commonly, the post-tensioning elements (e.g., tendons) are uniformly distributed along the tower perimeter, so that the resultant post-tension force falls approximately in the central axis of the tower, avoiding in this way eccentric forces due to the post-tension system.

Wind industry standards and guidelines usually require a minimum amount of post-tension so that no decompression occurs in concrete under Quasipermanent load level. This load level (also known as D3 or S3 load level, depending on the guideline) is the one that is only exceeded during 1% of the wind turbine lifetime. That is, by applying the minimum post-tension force required by guidelines, it is ensured that the structure will be subjected only to compressive stresses during the 99% of the wind turbine lifetime.

The post-tensioning elements (e.g., tendons) are usually located in the interior space of the tower, spanning from the foundation to an adapter disposed below the steel sections in case of a hybrid tower or below the nacelle in case of a full-concrete tower. Both ends of the post-tensioning elements are fixed in the foundation and adapter respectively.

However, due to the fact that the wind does not actually blow with the same intensity in every direction, the load level related to a probability of exceedance of 1% is not the same in every direction, resulting in asymmetrical loads on the full concrete tower or a concrete part of a hybrid tower. This can lead to collapse of the tower in case of extreme winds.

With the current wind turbine towers, the tower suffers a bending moment due to lateral loads, leading to a displacement of the tensioning element with regard to their position for which they have been designed. The retaining device of a post-tensioning element of a post-tensioning system of a tower of a wind turbine of the present invention solves all the above-mentioned drawbacks.

### DESCRIPTION OF THE INVENTION

The present invention relates to a retaining device of a post-tensioning element of a tower of a wind turbine, wherein the tower comprises:
- a central vertical axis;
- an inner wall which defines an internal space inside the tower;
- a lower end which comprises a lower surface and partially the inner wall;
- an upper end which comprises an upper surface and partially the inner wall;
- at least one post-tensioning element located in the internal space inside the tower;
- a tower height measured along the central vertical axis of the tower, from the lower surface to the upper surface when the tower is in an upright position; wherein the retaining device comprises:
   - a housing device configured to house, at least partially, the at least one post-tensioning element in the internal space at a first distance from the inner wall of the tower; and
   - anchoring means configured to anchor the housing device to the inner wall of the tower disposing the housing device at a first height along the tower height.

The retaining device so constituted allows to restrict the relative displacement of the post-tensioning element with respect to the inner wall of the tower. So, the distance between the tower wall and the post-tensioning device is maintained even if the tower suffers a bending due to lateral loads.

Optionally, the retaining device further comprises a first centering element disposed in the housing device and configured to be disposed, in use, between the at least one post-tensioning element and the housing device.

So, it is possible to dispose the first centering element with the post-tensioning element during the lifting of the post-tensioning element for being allocated in the housing device.

Optionally, the retaining device is also configured to adjust the first distance between the at least one post-tensioning element and the inner wall of the tower. In case, it would be necessary to modify the distance between the at least one post-tensioning element and the inner wall of the tower, it is not necessary to modify the geometry of the tower nor that of the post-tensioning element.

Optionally, the retaining device is also configured to adjust a position of the at least one post-tensioning element with regards to the inner wall of the tower in a circumferential direction. In case that the circumferential position of the post-tensioning element must be modified, it is only necessary to act on the retaining device to adjust the position of the at least one post-tensioning element with regards to the inner wall of the tower in a circumferential direction, preferably displacing the housing means with regard to the anchoring means and/or the centering element with regards to the housing means and/or modifying the geometry of the first centering element.

Optionally, the anchoring means comprise at least a plate, preferably two plates, configured to be anchored to the inner wall of the tower.

Optionally, the retaining device further comprising joining means configured to join the housing device to the anchoring device. Preferably, the joining means comprise vertical walls, preferably two, each one of them joined to a plate of the anchoring means. Preferably, the vertical walls are symmetrical with regard to a radial direction of the tower. Also preferably, the vertical walls are asymmetrical with regard to a radial direction of the tower.

Optionally, the first distance from the inner wall of the tower to the at least one post-tensioning element is between 0,05m and 0,5m, preferably between 0,09m and 0,30m, in a radial direction of the tower.

Optionally, the first height is in a central third along the tower height.

Optionally, a ratio between the first height and the tower height (TH) is between 0,5 and 0,6, preferably between 0,53 and 0,57.

The invention also relates to a guiding system of a post-tensioning element of a tower of a wind turbine comprising the retaining device described above.

Optionally, when the upper end of the tower further comprises:
- at least a through hole from the upper surface of the upper end to the inner wall of the upper end, configured to, at least partially, house the at least one post-tensioning element;
the guiding system further comprises a second centering element disposed, in use, between the at least one post-tensioning element and the through hole at a second height along the tower height.

This second centering element allows to orientate the post-tensioning element in the upper part of the tower.

Optionally, a ratio between the second height and the tower height is between 0,97 and 0,999, more preferably between 0,98 and 0,9.

Optionally, the guiding system further comprises at least a protrusion extending from the inner wall towards the central vertical axis of the tower, wherein, in use, the at least one post-tensioning element is abutted. Preferably, the at least one protrusion extends circumferentially along the inner wall of the tower. More preferably, the at least one protrusion is located at a third height along the tower height, wherein a ratio between the third height and the tower height is between 0,85 and 0,95, preferably between 0,87 and 0,93.

Optionally, the at least a protrusion comprises a gap, preferably a gap formed in a vertical joint between adjacent concrete segments when the concrete section comprises at least two concrete segments.

Optionally, the guiding system further comprises a resting plate configured to be disposed covering the gap of the protrusion.

So configured, if the at least one post-tensioning element falls in the gap of the protrusion between the at least two concrete segments at the third height along the tower height, damages in the at least one post-tensioning element are avoided.

The invention also relates to a tower of a wind turbine comprising:
- a central vertical axis;
- an inner wall which defines an internal space inside the tower;
- a lower end which comprises a lower surface and partially the inner wall;
- an upper end which comprises an upper surface and partially the inner wall;
- at least one post-tensioning element located in the internal space inside the tower;
- a tower height measured along the central vertical axis of the tower, from the lower surface to the upper surface when the tower is in an upright position; wherein the tower further comprises the guiding system described above.

Optionally, the tower comprises a plurality of guiding systems as described above, wherein the plurality of retaining devices is anchored to the inner wall of the tower in a circumferential direction at the first height along the tower height.

Optionally, the tower further comprises at least a first concrete section which in turn comprises at least two concrete segments.

Preferably, the plurality of retaining devices is anchored to the at least two concrete segments in the same circumferential position in the circumferential direction at the first height along the tower height, in each one of the at least two concrete segments.

Optionally, the upper end of the tower is a second concrete section comprising at least two concrete segments, the tower further comprising the guiding system described above in each one of the at least two concrete segments of the second concrete section.

Optionally, the at least one post-tensioning element forms an angle between 1.3° and 1.5° with the central vertical axis at a third height along the tower height, wherein a ratio between the third height and the tower height is between 0 and 0,92 and an angle between 0° and 1,5° with the central vertical axis at a fourth height along the tower height, wherein a ratio between the fourth height and the tower height is between 0,88 and 1.

The invention also relates to a retaining method of a post-tensioning element of a tower of a wind turbine as described above,
wherein method comprises:
- a step of housing at least partially the at least one post-tensioning element in the internal space at a first distance from the inner wall of tower; and
- a step of anchoring the housing device to the inner wall of the tower disposing the housing device at a first height along the tower height.

Optionally, the method further comprising:
- a step of centering the at least one post-tensioning element in the housing device.

Optionally, the method further comprises
- a step of housing the at least one post-tensioning element in a through hole from the upper surface of the upper end to the inner wall of the upper end; and
- a step of centering the at least one post-tensioning element in the through-hole at a second height along the tower height.

Optionally, the method further comprises:
- a step of abutting the at least one post-tensioning element in at least a protrusion extending from the inner wall towards the central vertical axis of the tower at a third height along the tower height.

Optionally, the step of anchoring the housing device to the inner wall of the tower disposing the housing device at a first height along the tower height comprises a step of anchoring the housing device to the inner wall of a concrete segment of the tower section before a step of lifting the concrete segment of the tower section to its position in height along the tower.

Optionally, the method comprises a step of lifting the at least one post-tensioning element along the height of the tower, at least up to the first height before the step of housing at least partially the at least one post-tensioning element in the internal space at a first distance from the inner wall of tower.

Preferably, the step of lifting the at least one post-tensioning element along the height of the tower further comprises lifting the at least one post-tensioning element at least up to the third height, preferably at least up to the second height, more preferably at least up to the fourth height, more preferably at least up to the tower height.

Optionally, the method further comprises a step of guiding auxiliary lifting means by a housing device configured to house, at least partially, the at least one post-tensioning element in the internal space at a first distance from the inner wall of the tower, wherein the step of guiding auxiliary lifting means is carried out before the step of lifting the at least one post-tensioning element along the height of the tower, at least up to the first height.

### BRIEF DESCRIPTION OF THE DRAWINGS

To complement the description being made and for the sake of a better understanding of the characteristics of the invention according to a preferred practical embodiment thereof, attached as an integral part of said description are a set of drawings wherein, for the purpose of illustration and not limiting the scope of the invention, the following is shown:

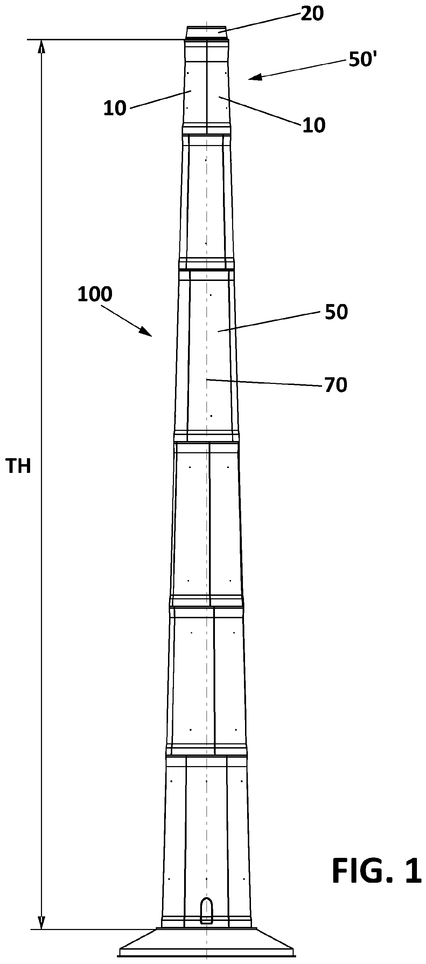

Figure 1 shows an elevation view of a tower of a wind turbine comprising at least a retaining device according to the invention.

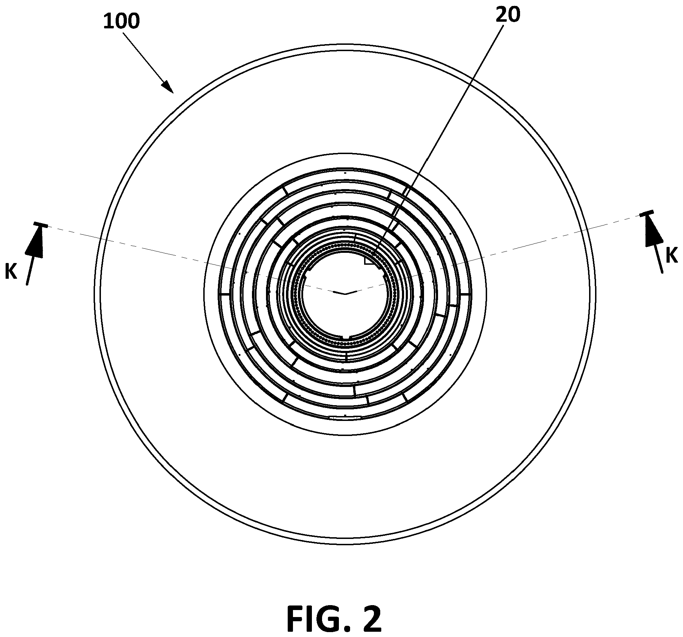

Figure 2 shows a top view of Figure 1.
Figure 3 shows a section view KK of Figure 2.
Figure 4 shows a detail Z of Figure 3.
Figure 5 shows a detail Y of Figure 3.
Figure 6 shows a detail X of Figure 3.
Figure 7 shows a detail W of Figure 3.

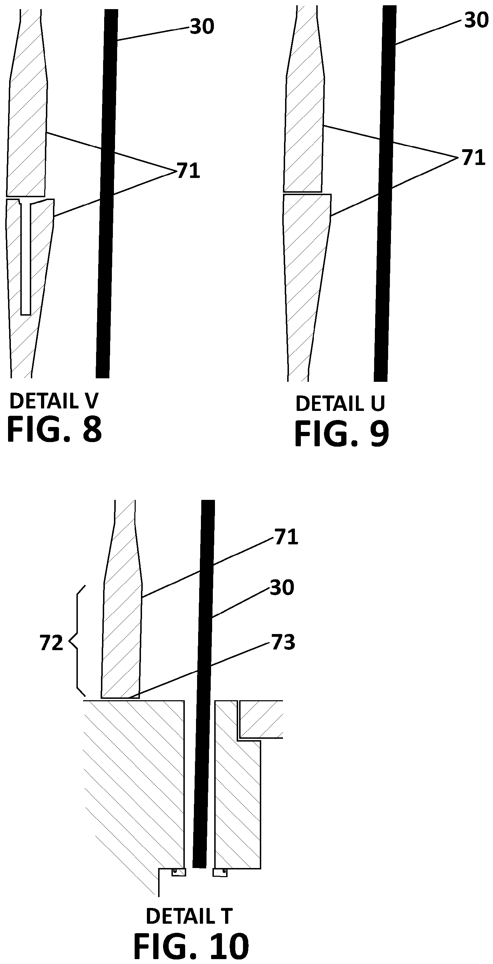

Figure 8 shows a detail V of Figure 3.
Figure 9 shows a detail U of Figure 3.
Figure 10 shows a detail T of Figure 3.

### PREFERRED EMBODIMENT OF THE INVENTION

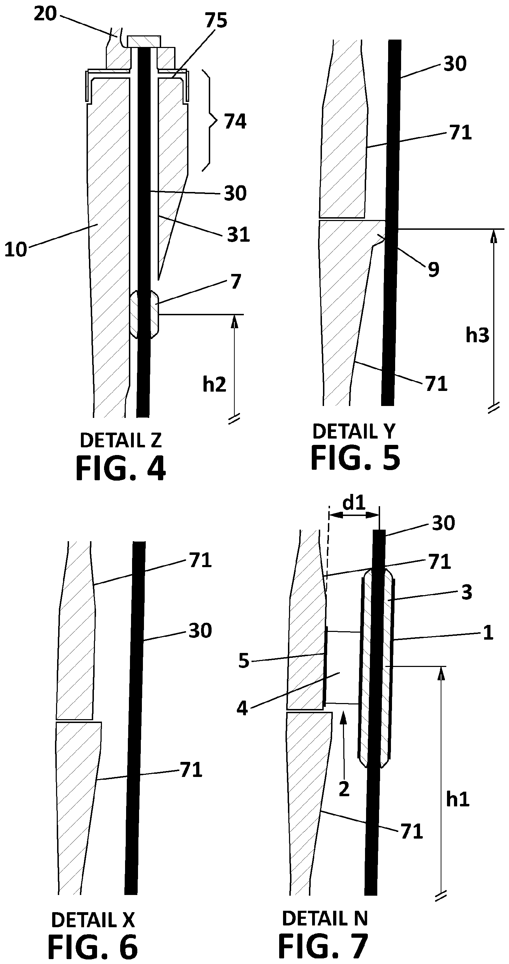

The invention is described in detail as follows. It relates to a retaining device, as shown in Figure 7, of a post-tensioning element of a tower (100) of a wind turbine, wherein the tower (100) comprises:
- a central vertical axis (70);
- an inner wall (71) which defines an internal space inside the tower (100);
- a lower end (72) which comprises a lower surface (73) and partially the inner wall (71);
- an upper end (74) which comprises an upper surface (75) and partially the inner wall (71);
- at least one post-tensioning element (30) located in the internal space inside the tower (100);
- a tower height (TH) measured along the central vertical axis (70) of the tower (100), from the lower surface (73) to the upper surface (75) when the tower is in an upright position;
wherein the retaining device comprises:
- a housing device (1) configured to house, at least partially, the at least one post-tensioning element (30) in the internal space at a first distance (d1) from the inner wall of the tower; and
- anchoring means (2) configured to anchor the housing device to the inner wall of the tower disposing the housing device at a first height along (h1) the tower height (TH).

The retaining device further comprising a first centering element (3), preferably toroidal, disposed in the housing device (1) and configured to be disposed, in use, between the at least one post-tensioning element (30) and the housing device (1).

The anchoring means (2) comprises two plates (5) configured to be anchored to the inner wall (71) of the tower (100), preferably by means of bolts and nuts.

The retaining device further comprises joining means (4) configured to join the housing device (1) to the anchoring device (2), being in this embodiment two vertical walls (4), each one of them joined to a plate (5) of the anchoring means (2).

Optionally, the first distance from the inner wall of the tower to the at least one post-tensioning element is between 0,05m and 0,5m, preferably between 0,09m and 0,30m, more preferably between 0,15m and 0,25m, in a radial direction of the tower.

In this embodiment, the first height is in a central third along the tower height. Preferably, the ratio between the first height (h1) and the tower height (TH) is between 0,5 and 0,6.

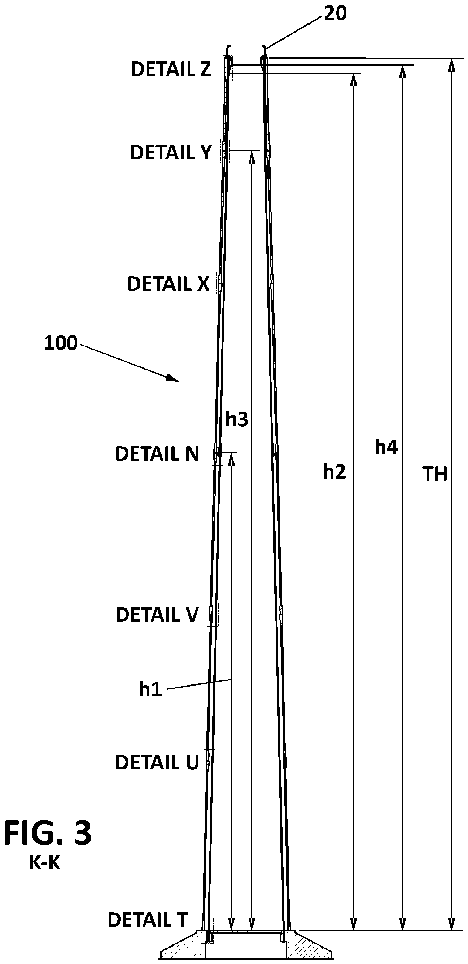

The guiding system of a post-tensioning element of a tower of a wind turbine is shown in figure 3, wherein the guiding system comprises the retaining device described above.

Preferably, the guiding system further comprises at least a through hole (31) from the upper surface (75) of the upper end (74) to the inner wall (71) of the upper end (74), configured to, at least partially, house the at least one post-tensioning element;
wherein the guiding system further comprises a second centering element (7) disposed, in use, between the at least one post-tensioning element (30) and the through hole at a second height (h2) along the tower height (TH).

In this embodiment, the ratio between the second height and the tower height is between 0,97 and 0,999.

The guiding system further comprises at least a protrusion (9) extending from the inner wall towards the central vertical axis of the tower, wherein, in use, the at least one post-tensioning element is abutted, wherein preferably, the at least one protrusion (9) extends circumferentially along the inner wall of the tower.

In this embodiment, the at least one protrusion is located at a third height (h3) along the tower height, wherein a ratio between the third height and the tower height is between 0,85 and 0,95.

The tower (100) of a wind turbine wherein the guiding system is disposed comprises:
- a central vertical axis (70);
- an inner wall (71) which defines an internal space inside the tower (100);
- a lower end (72) which comprises a lower surface (73) and partially the inner wall (71);
- an upper end (74) which comprises an upper surface (75) and partially the inner wall (71);
- at least one post-tensioning element (30) located in the internal space inside the tower (100);
- a tower height (TH) measured along the central vertical axis (70) of the tower (100), from the lower surface (73) to the upper surface (75) when the tower is in an upright position;
wherein the tower further comprises at least one guiding system described above.

Preferably, the tower (100) comprises a plurality of guiding systems, wherein the plurality of retaining devices is anchored to the inner wall of the tower in a circumferential direction at the first height (h1) along the tower height.

The tower comprises at least a first concrete section (50) which in turn comprises at least two concrete segments (10), wherein the plurality of retaining devices is anchored to the at least two concrete segments in the same circumferential position in the circumferential direction at the first height along the tower height, in each one of the at least two concrete segments (10).

The upper end of the tower is a second concrete section (50') comprising at least two concrete segments, the tower further comprising the guiding system of claim 12 in each one of the at least two concrete segments of the second concrete section.

In this embodiment, the at least one post-tensioning element forms an angle of 1,4° with the central vertical axis at a third height along the tower height, wherein a ratio between the third height and the tower height is between 0 and 0,92 and an angle between 0,9° with the central vertical axis at a fourth height (h4) along the tower height, wherein a ratio between the fourth height (h4) and the tower height is between 0,88 and 1, and an angle of 0° between the fourth height (h4) and the upper surface (75).

## Claims

1. Retaining device of a post-tensioning element of a tower (100) of a wind turbine,
wherein the tower (100) comprises:
- a central vertical axis (70);
- an inner wall (71) which defines an internal space inside the tower (100);
- a lower end (72) which comprises a lower surface (73) and partially the inner wall (71);
- an upper end (74) which comprises an upper surface (75) and partially the inner wall (71);
- at least one post-tensioning element (30) located in the internal space inside the tower (100);
- a tower height (TH) measured along the central vertical axis (70) of the tower (100), from the lower surface (73) to the upper surface (75) when the tower is in an upright position;
wherein the retaining device comprises:
- a housing device (1) configured to house, at least partially, the at least one post-tensioning element (30) in the internal space at a first distance (d1) from the inner wall of the tower; and
- anchoring means (2) configured to anchor the housing device to the inner wall of the tower disposing the housing device at a first height along (h1) the tower height (TH).

2. The retaining device of claim 1, further comprising a first centering element (3) disposed in the housing device and configured to be disposed, in use, between the at least one post-tensioning element and the housing device.

3. The retaining device of any one of previous claims, wherein the retaining device is also configured to adjust the first distance (d1) between the at least one post-tensioning element and the inner wall of the tower.

4. The retaining device of any one of previous claims, wherein the retaining device is also configured to adjust a position of the at least one post-tensioning element with regards to the inner wall of the tower in a circumferential direction.

5. The retaining device of any one of previous claims, wherein the anchoring means comprise at least a plate (5), preferably two plates, configured to be anchored to the inner wall of the tower.

6. The retaining device of any one of previous claims, further comprising joining means (4) configured to join the housing device to the anchoring device.

7. The retaining device of claims 4 and 5, wherein the joining means comprise two vertical walls (4), each one of them joined to a plate (5) of the anchoring means.

8. The retaining device of any of the previous claims, wherein the first distance from the inner wall of the tower to the at least one post-tensioning element is between 0,05m and 0,5m, preferably between 0,09m and 0,30m, in a radial direction of the tower.

9. The retaining device of any of the previous claims, wherein the first height is in a central third along the tower height.

10. The retaining device of any of the previous claims, wherein a ratio between the first height (h1) and the tower height (TH) is between 0,5 and 0,6.

11. Guiding system of a post-tensioning element of a tower of a wind turbine comprising the retaining device of any of the previous claims.

12. The guiding system of claim 11, wherein the upper end of the tower further comprises:
- at least a through hole (31) from the upper surface of the upper end to the inner wall of the upper end, configured to, at least partially, house the at least one post-tensioning element;
wherein the guiding system further comprises a second centering element (7) disposed, in use, between the at least one post-tensioning element and the through hole at a second height (h2) along the tower height.

13. The guiding system of claim 12, wherein a ratio between the second height and the tower height is between 0,97 and 0,999.

14. The guiding system of any of claims 11 to 13, further comprising at least a protrusion (9) extending from the inner wall towards the central vertical axis of the tower, wherein, in use, the at least one post-tensioning element is abutted.

15. The guiding system of claim 14, wherein the at least one protrusion (9) extends circumferentially along the inner wall of the tower.

16. The guiding system of any of claims 14 or 15, wherein the at least one protrusion is located at a third height (h3) along the tower height, wherein a ratio between the third height and the tower height is between 0,85 and 0,95.

17. Tower of a wind turbine comprising:
- a central vertical axis (70);
- an inner wall (71) which defines an internal space inside the tower (100);
- a lower end (72) which comprises a lower surface (73) and partially the inner wall (71);
- an upper end (74) which comprises an upper surface (75) and partially the inner wall (71);
- at least one post-tensioning element (30) located in the internal space inside the tower (100);
- a tower height (TH) measured along the central vertical axis (70) of the tower (100), from the lower surface (73) to the upper surface (75) when the tower is in an upright position;
wherein the tower further comprises the guiding system of any of claims 11 to 16.

18. The tower of claim 17 comprising a plurality of guiding systems according to any of claims 11 to 16, wherein the plurality of retaining devices is anchored to the inner wall of the tower in a circumferential direction at the first height (h1) along the tower height.

19. The tower of claim 18 comprising at least a first concrete section (50) which in turn comprises at least two concrete segments (10), wherein the plurality of retaining devices is anchored to the at least two concrete segments in the same circumferential position in the circumferential direction at the first height along the tower height, in each one of the at least two concrete segments (10).

20. The tower of any of claims 17-19, wherein the upper end of the tower is a second concrete section (50') comprising at least two concrete segments, the tower further comprising the guiding system of claim 12 in each one of the at least two concrete segments of the second concrete section.

21. The tower of any of claims 17 to 20, wherein the at least one post-tensioning element forms an angle between 1.3° and 1.5° with the central vertical axis at a third height along the tower height, wherein a ratio between the third height and the tower height is between 0 and 0,92 and an angle between 0° and 1,5° with the central vertical axis at a fourth height (h4) along the tower height, wherein a ratio between the fourth height (h4) and the tower height is between 0,88 and 1.

22. Retaining method of a post-tensioning element of a tower of a wind turbine according to any of claims 17 to 21,
wherein method comprises:
- a step of housing at least partially the at least one post-tensioning element in the internal space at a first distance from the inner wall of tower; and
- a step of anchoring the housing device to the inner wall of the tower disposing the housing device at a first height along the tower height.

23. The method of claim 22, further comprising:
- a step of centering the at least one post-tensioning element in the housing device.

24. The method of any of claims 22 or 23 further comprising:
- a step of housing the at least one post-tensioning element in a through hole from the upper surface of the upper end to the inner wall of the upper end; and
- a step of centering the at least one post-tensioning element in the through-hole at a second height along the tower height.

25. The method of any of claims 22 or 23, further comprising:
- a step of abutting the at least one post-tensioning element in at least a protrusion extending from the inner wall towards the central vertical axis of the tower at a third height along the tower height.
